# EUROPÄISCHE PATENTSCHRIFT

(11) **EP 3 397 904 B1**
(45) Veröffentlichungstag und Bekanntmachung des Hinweises auf die Patenterteilung: **11.09.2019**
(21) Anmeldenummer: 16822156.2
(22) Anmeldetag: 20.12.2016
(51) Int. Cl.: F24H 1/12, A47J 31/54, F24H 9/18, F24H 9/20

(54) **DURCHLAUFERHITZER**
THROUGHFLOW HEATER
CHAUFFE-EAU INSTANTANÉ

(30) Priorität: 28.12.2015 CH 19132015
(43) Veröffentlichungstag der Anmeldung: 07.11.2018
(73) Patentinhaber: C3 Casting Competence Center GmbH, 9246 Niederbüren (CH)
(72) Erfinder: WAGNER, Manuela, 9246 Niederbüren (CH); WAGNER, Walter, 9246 Niederbüren (CH)
(74) Vertreter: Kaminski Harmann Patentanwälte AG (Schweiz)
(86) Internationale Anmeldenummer: PCT/EP2016/081949
(87) Internationale Veröffentlichungsnummer: WO 2017/114693

(56) Entgegenhaltungen:
- EP-A1- 1 774 884
- WO-A1-2013/189869
- CH-A- 89 508
- DE-C1- 19 737 694
- GB-A- 920 465
- US-A1- 2003 138 244

## Beschreibung

Die Erfindung betrifft Durchlauferhitzer mit elektrischen Heizeinrichtungen.

Aus der DE 10 2009 024 059 A1 ist ein Durchlauferhitzer mit einer zylindrischen, elektrischen Heizeinrichtung und einem diese zumindest teilweise in einem Abstand umgebenden Hüllrohr bekannt. Flüssigkeit fliesst zwischen der zylindrischen Heizeinrichtung und dem Hüllrohr von einem Zulauf zu einem Ablauf und wird dabei erhitzt. Die Heizeinrichtung umfasst ein zylindrisches Mantelrohr und im Innern des Mantelrohres einen gewendelten Heizdraht und Magnesiumoxid, wobei das Magnesiumoxid den gesamten nicht vom Heizdraht belegten Innenraum des Mantelrohrs ausfüllt. Das Magnesiumoxid nimmt vom Heizdraht erzeugte Wärme auf und leitet diese zumindest teilweise zum Mantelrohr. Wenn dieser Durchlauferhitzer ausgehend vom kalten Zustand Flüssigkeit erhitzt, so muss zuerst eine grosse Menge Magnesiumoxid erhitzt werden, was zu einer trägen Funktionsweise führt, die in vielen Anwendungsbereichen unerwünscht ist.

Eine Überhitzungssicherung, insbesondere eine Schmelzsicherung, ist gemäss DE 10 2009 024 059 A1 an der Aussenseite des Hüllrohres angebracht, wobei das Hüllrohr an dieser Stelle am Mantelrohr der Heizeinrichtung anliegt, so dass die Überhitzungssicherung die Temperatur des Mantelrohres misst. Die vom Hüllrohr radial nach aussen vorstehende Überhitzungssicherung braucht Platz, der bei Geräten mit engen Platzverhältnissen häufig nicht zur Verfügung steht. Zudem hat es sich gezeigt, dass die Schmelzsicherung manchmal zerstört wird, ohne das Auftreten eines Ereignisses, welches das Schmelzen als Schutz vor einer gefährlichen Überhitzung wirklich nötig gemacht hätte.

Aus der WO 2013/189869 A1 ist ein Durchlauferhitzer bekannt, der ausgehend vom kalten Zustand heisse Flüssigkeit bereitstellt, wobei dann zumindest kurzzeitig eine sehr hohe elektrische Leistung benötigt wird. Bei Ausführungen mit kurzer Reaktionszeit können vom Heizdraht Spannungsdurchschläge zum elektrisch leitenden Hüllrohr auftreten. Der Durchlauferhitzer ist an seiner Aussenseite mit einer Überhitzungssicherung, nämlich einer Efensicherung, ausgerüstet. Der Platzbedarf des Durchlauferhitzers mit Überhitzungssicherung ist gross. Zudem können unnötige Schutzauslösungen auftreten.

Die Schriften EP 2 543 936 A2, DE 689 15 124 T2, DE 601 00 257 T2, GB 2 098 436 A und WO 2010/060756 A1 zeigen Durchlauferhitzer, die nur langsam aufheizen. Ein weiterer Nachteil besteht darin, dass die Überhitzungssicherung in Achsrichtung an den Heizdraht anschliessend bei zumindest einem stirnseitigen Ende einer zylindrischen Heizeinrichtung angeordnet ist. Durch diese Anordnung der Überhitzungssicherung wird die Länge der Heizeinrichtung bereits aufgrund der Überhitzungssicherung unerwünscht gross. Lange zylindrische Heizeinrichtungen können in Geräten mit engen Platzverhältnissen nicht oder nur mit unerwünschten Kompromissen bezüglich anderer Elemente eingesetzt werden. Die elektirschen Anschlüsse an beiden Stirnseiten der Heizeinrichtung verlangen zusätzlichen Freiraum im Gerät.

Auch bei den Ausführungen mit der Überhitzungssicherung bei einer Stirnseite kann die Schmelzsicherung zerstört werden, ohne dass ein Ereignis auftritt, welches das Schmelzen als Schutz vor einer gefährlichen Überhitzung wirklich nötig macht. In speziellen Situationen ist es aber auch möglich, dass ein nötiges Auslösen des Überhitzungsschutzes nicht stattfindet.

Die Lösung gemäss der DE 34 33 688 A1 zeigt eine Überhitzungssicherung im mittleren axialen Bereich der zylindrischen Heizvorrichtung zwischen zwei Bereichen mit je einem Heizdraht. Das Einsetzen der Überhitzungssicherung zwischen zwei Heizdrähte, das Anordnen der beiden Heizdrähte mit der Überhitzungssicherung im Mantelrohr und das anschliessende Einfüllen des wärmeleitenden und elektrisch isolierenden Materials in die Bereiche ausserhalb und innerhalb der schraubenlinienförmig verlaufenden Heizdrähte sowie um die Überhitzungssicherung ist sehr aufwändig. Zudem wird durch die Anordnung der Überhitzungssicherung in der Heizeinrichtung die Länge der Heizeinrichtung unerwünscht erhöht und die elektrischen Anschlüsse an beiden Stirnseiten der Heizeinrichtung schränken die Verwendung dieser Heizeinrichtung ein.

CH 89 508 offenbart einen Durchlauferhitzer gemäß dem Oberbegriff des Anspruchs 1 und beschreibt einen Wassererwärmer mit einem mit Aspest oder einem anderen wärmeisolierenden Material umwickelten Hohlzylinder auf dem von Isoliermaterial eingeschlossene elektrische Heizelemente angeordnet sind. Ein Deckmantel weist zwischen zwei Zylindern eine Isolierung und elektrische Heizelemente auf. Durchfliessendes Wasser wird von den beidseits des Fliessweges vorgesehenen Heizelementen erhitzt.

EP 1 774 884 A1 beschreibt einen Warmwasser- und/oder Dampf-Generator mit einem in einem Hohlraum angeordneten Heizelement, das innerhalb eines Rohrmantels einen spiralförmig gewickelten Widerstand umfasst. Die Wärme gelangt über Kontaktflächen vom gewickelten Widerstand in den Rohrmantel und von diesem in den Hohlraum.

Die erfindungsgemässe Aufgabe besteht nun darin, einen schnell aufheizenden Durchlauferhitzer zu finden, der einfach hergestellt und effizient eingesetzt werden kann. Die Aufgabe wird durch die Merkmale des Patentanspruchs 1 gelöst. Die abhängigen Patentansprüche beschreiben alternative bzw. vorteilhafte Ausführungsvarianten, welche weitere Aufgaben lösen.

Die erfinderischen Durchlauferhitzer sind aussen von einer mantelförmigen Aussenfläche und zwei Stirnseiten berandet. Die Aussenfläche umschliesst eine Längsachse und die zwei voneinander abgewandten Stirnseiten verlaufen quer zur Längsachse. Innen an die Aussenfläche schliesst ein Durchführbereich für ein zu erhitzendes Fluid an. Eine Übergangsfläche befindet sich innen am Durchführbereich. An die Übergangsfläche schliesst gegen die Längsachse hin eine Heizschicht mit einem elektrischen Heizelement und wärmeleitendem Material an. An die Heizschicht schliesst gegen die Längsachse hin eine Trägerschicht eines zentralen Isolierkerns an. Die Wärmeleitfähigkeit des Isolierkerns ist kleiner als jene des wärmeleitenden Materials. Dadurch wird gewährleistet, dass der überwiegende Anteil der vom Heizelement erzeugten Wärme von der Längsachse weg nach aussen zum Durchführbereich für das zu erwärmende Medium geleitet wird.

Der erfinderische Durchlauferhitzer umfasst eine innere Hülse, eine äussere Hülseund zwischen der inneren und der äusseren Hülse mindestens einen Kanal, der sich nach aussen abgeschlossen zwischen zwei Anschlüssen erstreckt, um die Längsachse gewendelt verläuft und dazu mindestens eine gewendelte Führungswand umfasst, die sich von der Aussenfläche gegen die Übergangsfläche erstreckt und einen rechteckigen Kanal-Querschnitt mit zwei langen Seiten bei den Hülsen und zwei kurzen, radial verlaufenden Seiten bei der Führungswand festlegt. Im Rahmen der Erfindung wurde erkannt, dass beim Querschnitt des gewendelten Kanals die Länge der kurzen Seiten kleiner als 1mm sein muss, vorzugsweise im Bereich von 0.8mm bis 0.4mm liegen soll.

Mit dieser unerwartet minimalen kurzen Seite bzw. mit der kleinen radialen Ausdehnung des Kanals kann ein äusserst schnell aufheizender Durchlauferhitzer bereitgestellt werden, der im Betrieb keine unerwünscht hohen elektrischen Leistungsspitzen benötigt. Zum Finden dieser Lösung musste das Vorurteil überwunden werden, dass eine genügende Ausflussmenge einer erwärmten Flüssigkeit nur mit einem grossen Aufnahmevolumen im Durchlauferhitzer und mit Kanalquerschnitten erzielbar ist, die auch noch bei Kalkablagerungen einen Durchfluss zulassen. Mit der erfindungsgemässen äusserst kleinen radialen Ausdehnung des Kanals wird die Durchströmungsgeschwindigkeit erhöht, was die Ablagerung von Kalk im Wesentlichen verhindert. Die mit der höheren Durchströmungsgeschwindigkeit reduzierte Aufenthaltszeit der Flüssigkeit im Durchlauferhitzer ist für die schnelle Erhitzung der Flüssigkeit weniger nachteilig als die Trägheit bei der Erhitzung einer Flüssigkeit in einem Kanal mit den aus dem Stande der Technik bekannten grossen radialen Ausdehnungen.

Nebst der kleinen radialen Ausdehnung des Kanals ist auch das Verhältnis zwischen der langen und der kurzen Seite des Kanalquerschnitts für ein schnelles Aufheizen wichtig. Bei einer bevorzugten Ausführungsform werden die langen Seiten mindestens sechsmal so gross gewählt wie die kurzen Seiten. Vorzugsweise sind die langen Seiten maximal achtmal so gross wie die kurzen Seiten.

Bei einem optimierten Kanalquerschnitt ist die Effizienz des Durchlauferhitzers noch weiter verbessert, wenn die Wandstärke der inneren Hülse weniger als 0.5mm beträgt. Bei einer optimierten Herstellung werden der Isolierkern und das Magnesiumoxid in eine innere Hülse eingefüllt und zum Verdichten des Magnesiumoxids ein Walzschritt durchgeführt. Bei einer bevorzugten Ausführung hat die innere Hülse eine Wandstärke von weniger als 0.3mm. Diese kleine Wandstärke gewährleistet einen im Wesentlichen unverzögerten Wärmeübergang von der Heizschicht in die Flüssigkeit. Weil die Hülse im Innern vom Isolierkern und vom verdichteten Magnesiumoxid vollständig aufgefüllt ist, kann die nötige mechanische Stabilität bereits mit einer äusserst kleinen Wandstärke gewährleistet werden.

Zur weiteren Reduktion der Wärmeübertragungs-Trägheit und zur Reduktion des unerwünschten Abfliessens von Wärme über die Kanalwände wird die Wandstärke der Kanalwände kleiner 0.4mm, vorzugsweise kleiner als 0.2mm gewählt.

Das schnelle Erhitzen des Durchlauferhitzers wird noch weiter verbessert, wenn die Wandstärke der äusseren Hülse weniger als 0.8mm, vorzugsweise weniger als 0.5mm beträgt. Damit wird die beim Aufheizen von der äusseren Hülse aufgenommene Wärmemenge reduziert. Damit die äussere Hülse weniger Wärme abgeben kann, wird sie vorzugsweise noch von einer wärmeisolierenden Schicht umgeben. Weil die äussere Hülse von Durchlauferhitzern in Geräten jeweils zu den anderen Teilen der Geräte einen minimalen Abstand von ca. 15mm aufweist, ist der Wärmeverlust über Wärmeleitung schon klein. Um auch die abgestrahlte Wärme genügend zu reduzieren, genügt in vielen Anwendungen bereits das Anordnen einer Folie auf der Aussenfläche der äusseren Hülse.

Eine bevorzugte Ausführungsform verhindert auch bei einer äusserst dünnen Schicht des wärmeleitenden Materials Spannungsdurchschläge vom elektrischen Heizelement zu einer dieses umschliessenden Hülse, indem Distanzhalter eine exakte Positionierung des Isolierkerns in der inneren Hülse sicherstellen. Diese exakte Positionierung kann weder bei der Produktion noch beim Transport oder während Heizvorgängen verändert werden. Auch bei kleinen radialen Distanzen zwischen dem auf der Trägerfläche des Isolierkerns gehaltenen elektrischen Heizelement und der inneren Hülse können Spannungsdurchschläge verhindert werden, weil die minimal nötige radiale Distanz überall gleich ist und sich nicht verändern kann.

Bei dieser Ausführungsform ist der Isolierkern mit der elektrischen Heizwendel und gegebenenfalls mit einer Überhitzungssicherung in der inneren Hülse angeordnet. Bei beiden axialen Enden des Isolierkerns sind je zumindest drei in im Wesentlichen gleichmässigen Abständen entlang des Umfangs verteilte radial über die Trägerfläche vorstehende Bereiche mit Distanzhaltern vorhanden, welche eine zentrale Positionierung des Isolierkerns innerhalb der inneren Hülse sicherstellen. Die Distanzhalter können gegebenenfalls als separate Teile eingesetzt werden. Vorzugsweise sind sie aber als radiale Vorsprünge des Isolierkerns ausgebildet. Mit den Distanzhaltern wird auch bei einer kleinen Mächtigkeit der Heizschicht ein direkter Kontakt zwischen der elektrischen Heizwendel und der inneren Hülse verhindert, bzw. ein minimaler Abstand sichergestellt. Es versteht sich von selbst, dass die Distanzhalter in Umfangsrichtung kleine Ausdehnungen haben können, oder aber von Abschnitten ringförmiger Vorsprünge oder Elemente gebildet werden.

Vorzugsweise ist die innere Hülse aus Metall gebildet und bei einer Stirnseite mit einer metallischen Stirnfläche becherförmig abgeschlossen. Zwischen der inneren Hülse und dem Isolierkern mit der elektrischen Heizwendel ist erfindungsgemäß pulverförmiges wärmeleitendes und elektrisch isolierendes Material, beispielsweise Magnesiumoxyd, angeordnet. Um die gewünschte hohe Wärmeleitfähigkeit zu erzielen, wird das pulverförmige Material verdichtet. Das Volumen der gefüllten inneren Hülse kann mit einem Walz- oder Hammerverfahren durch radiales Verengen und/oder durch das Eindrücken der Stirnfläche verkleinert werden, so dass das pulverförmige Material verdichtet und die Leerräume verdrängt werden. Weil die beim Walzen oder Hämmern auch auf den Isolierkern und die Distanzhalter wirkenden Kräfte sehr gross sein können, wird das Material des Isolierkerns und der Distanzhalter so gewählt, dass es diese Kräfte aushält.

Beim wärmeleitenden und elektrisch isolierenden Material genügt bereits ein radialer Abstand zwischen dem Heizdraht und der Hülse der Aussenschicht von weniger als 2mm, insbesondere im Wesentlichen 1.5mm, um ein elektrisches Durchschlagen zu verhindern. Entsprechend dem kleinen Abstand ist auch die Masse der Heizschicht sehr klein, so dass die vom Heizdraht erzeugte Wärme durch das Aufwärmen dieser kleinen Masse nur unwesentlich verzögert zum Durchführbereich und damit zum zu erwärmenden Medium gelangt.

Die becherförmige innere Hülse wird bei der offenen Stirnseite mit einem ersten elektrischen Anschlusskontakt und vorzugsweise mit einem abschliessenden Pfropfen versehen.

Bei einem Durchlauferhitzer mit einem Isolierkern, der sich zentrisch entlang der Längsachse des Durchlauferhitzer erstreckt und eine kleinere Wärmeleitfähigkeit aufweist als das wärmeleitende Material einer aussen an den Isolierkern anschliessende Heizschicht, können die Überhitzungssicherung und die Baugrösse optimiert werden. Dazu ist im Isolierkern ein sich in Richtung der Längsachse erstreckender Hohlraum ausgebildet und in diesem mindestens eine Überhitzungssicherung angeordnet. Die Mantelfläche des Isolierkerns bildet eine Trägerfläche für das elektrische Heizelement und das Heizelement ist auch im Bereich mit der Überhitzungssicherung angeordnet. Darum kann im Wesentlichen die gesamte Längsausdehung des Durchlauferhitzers für die Anordnung des Heizelements genutzt werden, was für jede vorgegebene Heizleistung eine minimale Baulänge ermöglicht.

Wenn die Ausdehnung des Durchlauferhitzers in Richtung der Längsachse kürzer sein muss, so kann mit einer Erhöhung des Querschnitts des Isolierkerns die Grösse der Trägerfläche und damit die Fläche für das Heizelement gleich gross gehalten, bzw. an die gewünschte Heizleistung angepasst, werden. Weil der Isolierkern eine kleinere Wärmeleitfähigkeit aufweist als das aussen an das Heizelement anschliessende wärmeleitende Material, gelangt der überwiegende Anteil der erzeugten Wärme schnell zum Durchführbereich und dort in das zu erhitzende Fluid.

Ein Wärmefluss vom Heizelement zur Überhitzungssicherung wird durch die im Vergleich zum wärmeleitenden Material der Heizschicht kleinere Wärmeleitfähigkeit des Isolierkerns reduziert und verzögert, was als erster Effekt bezeichnet wird. Wenn nun beispielswiese nur kurzzeitig die erzeugte Wärme nicht an ein zu erhitzendes Fluid abgegeben werden kann, so steigt die Temperatur bei der Überhitzungssicherung nicht so weit an, dass die Sicherung schon ausgelöst wird. Weil das Heizelement auch im Längsabschnitt mit der Überhitzungssicherung auf der sich um die Überhitzungssicherung erstreckenden Trägerfläche angeordnet ist, kann die Überhitzungssicherung nicht durch eine äussere Störung unter eine Auslösungstemperatur gekühlt werden, während gleichzeitig die Temperatur eines Bereichs des Durchlauferhitzers bereits über einer maximal zulässigen Temperatur liegt, was als zweiter Effekt bezeichnet wird. Durch diese beiden Effekte wird sichergestellt, dass die Überhitzungssicherung weder unnötig noch zu spät ausgelöst wird.

Die im Isolierkern angeordnete Überhitzungssicherung ist auf einer elektrischen Verbindungsseite mit einem an einer Stirnseite angeordneten ersten elektrischen Anschlusskontakt und auf der anderen elektrischen Verbindungsseite mit einem ersten Kontakt des am Isolierkern angeordneten elektrischen Heizelements verbunden. Das Anordnen des Heizelementes und der Überhitzungssicherung am bzw. im Isolierkern sowie das Ausbilden der benötigten elektrischen Verbindungen sind mit einem kleinen Aufwand verbunden.

Überhitzungssicherungen werden auch als Thermosicherungen bezeichnet. Industriesicherheitsstandards garantieren eine sichere Funktionsweise, indem bei Überhitzung der Stromkreis abgeschaltet wird. Je nach Anwendung steht eine grosse Modellauswahl zur Verfügung, um die verschiedenen Anforderungen von Betriebstemperaturen sowie Nennströmen zu erfüllen. Die Sicherheit wird noch erhöht, wenn zwei Sicherungen in Serie angeordnet sind.

Der erfindungsgemässe Durchlauferhitzer ist kompakt, einfach aufgebaut und schnell aufheizend.

Gemäss einer bevorzugten Ausführungsform umfasst der Isolierkern Silikatkeramik und/oder Oxidkeramik und/oder Nichtoxidkeramik, wobei das Keramikmaterial geformt und mittels Sintern zum Isolierkern verdichtet ist. Die Wärmeleitfähigkeit des Isolierkerns ist maximal halb so gross ist wie die Wärmeleitfähigkeit des wärmeleitenden Materials. Vorzugsweise umfasst der Isolierkern Keramikmaterial, dessen Wärmeleitfähigkeit kleiner ist als 5 Wm⁻¹K⁻¹, insbesondere kleiner als 3 Wm⁻¹K⁻¹, und dessen elektrischer Widerstand bei 20°C bis 120°C vorzugsweise grösser ist als 10⁶ Ωm, insbesondere grösser als 10⁹ Ωm.

Der Isolierkern kann beispielsweise
Steatit mit
Wärmeleitfähigkeit ca. 2 bis 3 Wm⁻¹K⁻¹, el. Widerstand ca. 10¹¹ Ωm,
Corderit mit
Wärmeleitfähigkeit ca. 1,5 bis 2,5 Wm⁻¹K⁻¹, el. Widerstand ca. 10¹⁰ Ωm, oder
Aluminiumtitanat mit
Wärmeleitfähigkeit ca. 1,5 bis 3 Wm⁻¹K⁻¹, el. Widerstand ca. 10¹¹ Ωm,
umfassen.

Damit die beim Verdichten des wärmeleitenden Materials auch auf den Isolierkern wirkenden Kräfte keine Risse im Isolierkern oder in den Distanzhaltern erzeugen, werden dem Material des Isolierkerns gegebenenfalls Zusätze zugegeben, welche das Entstehen von Rissen verhindern.

Gemäss einer weiteren bevorzugten Ausführungsform sind die Aussenfläche, die Übergangsfläche, sowie die Trägerfläche jeweils im Wesentlichen zylindermantelförmig mit einem kreisförmigen Querschnitt ausgebildet, wobei sich der Radius von der Längsachse zur Trägerfläche vorzugsweise mindestens über 70%, insbesondere mindestens über 80%, des Radius von der Längsachse zur Übergangsfläche erstreckt. Dadurch kann ein besonders kompakter Aufbau gewährleistet werden.

Gemäss einer weiteren bevorzugten Ausführungsform weist der Hohlraum des Isolierkerns eine Hohlraumachse auf, die in einem Abstand zur zentralen Längsachse des Isolierkerns verläuft, so dass der kleinste Abstand zwischen der im Hohlraum angeordneten mindestens einen Überhitzungssicherung und dem nächstgelegenen Bereich des elektrischen Heizelements einem vorgegebenen Abstand entspricht. Der vorgegebene Abstand kann abhängig von den Wärmeleitfähigkeiten des Isolierkerns und des wärmeleitenden Materials so gewählt werden, dass die Temperaturentwicklung bei der Überhitzungssicherung mit einer gewünschten Trägheit bzw. Dämpfung erfolgt.

Gemäss einer weiteren bevorzugten Ausführungsform ist an der Stirnseite mit dem ersten elektrischen Anschlusskontakt auch ein zweiter elektrischer Anschlusskontakt angeordnet, welcher mit einem zweiten Kontakt des elektrischen Heizelements verbunden ist, wobei im Isolierkern eine sich parallel zur Längsachse erstreckende Bohrung ausgebildet ist, durch welche eine elektrische Verbindung von einem Kontakt des Heizelements gegen einen der beiden elektrischen Anschlusskontakte geführt ist. Die Anordnung dieser Anschlusskontakte an einer Stirnseite erleichtert den Einbau des Durchlauferhitzers in einem Gerät.

Gemäss einer weiteren bevorzugten Ausführungsform wird das Heizelement von einem Widerstandsdraht gebildet, der als elektrischer Heizwendel vom einen zum anderen stirnseitigen Ende des Isolierkerns auf die Trägerfläche des Isolierkerns aufgewickelt ist und der Isolierkern aufgrund eines genügend hohen elektrischen Widerstands elektrisch isolierend ist. Diese Ausführung kann einfach hergestellt werden.

Gemäss der Erfindung weist das wärmeleitende Material eine Wärmeleitfähigkeit über 5 Wm⁻¹K⁻¹ auf, und der elektrische Widerstand des wärmeleitenden Materials bei 20°C bis 120°C ist grösser als 10⁶ Ωm, vorzugsweise grösser als 10⁹ Ωm. Das wärmeleitende Material zwischen dem elektrischen Heizelement und der Übergangsfläche weist vorzugsweise eine Mächtigkeit von maximal 4 mm oder gegebenenfalls von maximal 2 mm auf, so dass vom Heizelement abgegebene Wärme ohne störenden Zeitverzug zum Durchführbereich gelangt und das elektrische Heizelement elektrisch isoliert ist.

Das wärmeleitende Material kann beispielsweise
Magnesiumoxid mit
Wärmeleitfähigkeit ca. 6 bis 10 Wm⁻¹K⁻¹, el. Widerstand ca. 10¹¹ Ωm, Aluminiumoxid mit
Wärmeleitfähigkeit ca. 10 bis 30 Wm⁻¹K⁻¹, el. Widerstand ca. 10¹² Ωm, oder Aluminiumsilikat (65-80% Al₂O₃) mit
Wärmeleitfähigkeit ca. 6 bis 15 Wm⁻¹K⁻¹, el. Widerstand ca. 10¹¹ Ωm,
umfassen.

Es gibt auch Keramikmaterial mit noch grösserer Wärmeleitfähigkeit und einem hohen elektrischen Widerstand, beispielsweise Nichtoxidkeramik wie Aluminiumnitrid mit einer Wärmeleitfähigkeit von 100 bis 180 Wm⁻¹K⁻¹ und einem elektrischen Widerstand von ca. 10¹² Ωm und Alunit mit einer Wärmeleitfähigkeit von ca. 180 Wm⁻¹K⁻¹ und einem elektrischen Widerstand von ca. 10¹¹ Ωm. Ein weiteres Beispiel der Oxidkeramik ist Al₂-ZrO₂ mit einer Wärmeleitfähigkeit von ca. 20 Wm⁻¹K⁻¹ und einem elektrischen Widerstand von ca. 10⁹ Ωm.

Gemäss einer bevorzugten Ausführungsform ist die äussere Hülse zumindest bei einer-Stirnseite dicht mit der inneren Hülse verbunden. Zwischen der inneren und der äusseren Hülse ist mindestens ein Kanal ausgebildet, der sich zwischen zwei Anschlüssen erstreckt. Dieser Kanal verläuft vorzugsweise um die Längsachse gewendelt. Zur Kanalbildung ist mindestens eine gewendelte Führungswand vorhanden. Die Führungswand erstreckt sich von der Aussenfläche gegen die Übergangsfläche und ist an der äusseren Hülse oder an der inneren Hülse ausgebildet oder als Zwischenteil zwischen die innere und die äussere Hülse eingesetzt. Die Führungswand muss lediglich gewährleisten, dass der grosse Anteil des durch den Kanal fliessenden Mediums vollständig entlang der Wendelform fliesst. Auch wenn die Führungswand nicht vollständig dicht an beide Hülsen anschliesst, wird immer noch ein im Wesentlichen der Wendelform folgendes Durchströmen des Kanals gewährleistet.

Das Einarbeiten des Kanals in die Innenseite oder in die Aussenseite einer Hülse kann auch bereits vor dem Ausbilden der Hülsenform durchgeführt werden. Dazu kann beispielsweise ein Zuschnitt eines Blechs mit einer Presse in eine Form gepresst werden, so dass auf einer Seite vom Blech Segmente der Kanalwand vorstehen. Dieses Blech mit vorstehenden Segmenten der Kanalwand kann dann in eine Rohrform umgeformt und bei aneinander anliegenden Seitenlinien mit einer Längsnaht, insbesondere einer Lasernaht, zu einem Rohr geschlossen werden. Die Segmente der Kanalwand schliessen dann so aneinander an, dass eine wendelförmige Kanalwand bereitgestellt wird. Die Längsnaht kann dabei auch bei der Kanalwand ausgebildet werden. Die Kanalwand muss nicht unbedingt durchgehend sein, weil sie ja nur sicherstellen muss, dass das Wasser im Wesentlichen entlang des Kanals durch den Durchlauferhitzer strömt. Es sind auch Ausführungsformen möglich, bei denen die Kanalwand bei der Längsnaht unterbrochen ist, so dass die miteinander zu verbindenden Seitenlinien des Blechzuschnitts entlang von geraden Linien verlaufen. Dadurch wird die Ausbildung der Längsnaht vereinfacht.

An den Kanal anschliessend sind bei einem Ende des Kanals ein Zulauf für eine zu erhitzende Flüssigkeit und am anderen Ende ein Ablauf für diese ausgebildet. Der Zulauf und der Ablauf führen vorzugsweise in radialer Richtung durch die äussere Hülse.

Um die erzeugte Wärme im Wesentlichen vollständig dem Medium bzw. der Flüssigkeit im Kanal zuzuführen, werden in einer weiteren bevorzugten Ausführungsform die wendelförmig verlaufenden Führungswände möglichst schmal ausgebildet, sodass in einem Längsschnitt des zylinderförmigen Durchlauferhitzers der überwiegende Längenanteil vorzugsweise mehr als 80%, insbesondere mehr als 90%, von den in Achsrichtung nebeneinander liegenden Kanalabschnitten belegt wird. Wenn der Kanal mit einem zu erwärmenden Medium gefüllt ist, geht der überwiegende Anteil der von der Innenschicht radial nach aussen strömenden Wärme direkt in das Medium. Selbst von den schmalen Kanalwänden geht ein grosser Anteil der zuströmenden Wärme in das zu erwärmende Medium, so dass nur ein äusserst kleiner Anteil der Wärme nicht ins Medium gelangt.

Die Dimensionierung des Durchlauferhitzers, insbesondere die radialen und axialen Ausdehnungen der Aussenschicht und der Innenschicht, sowie die Heizleistung der Heizwendel können problemlos an die jeweilige Anwendung angepasst werden. Der erfindungsgemässe Durchlauferhitzer kann überall dort vorteilhaft eingesetzt werden, wo ohne Wärmespeicherung mit kurzen Reaktionszeiten vorgegebene Durchflussmengen eines Mediums auf einer vorgegebenen Temperatur bereitgestellt werden müssen.

Der Durchlauferhitzer wird zum Erwärmen von Wasser verwendet, wobei die elektrische Speisung des elektrischen Heizelementes über eine Steuerung kontrolliert wird, welche zumindest festlegt, ob das Heizelement elektrisch gespeist werden soll oder ob keine Wärme erzeugt werden soll. Vorzugsweise ist die jeweilige Erhitzung des Wassers an eine wählbare Verbrauchstemperatur anpassbar, insbesondere mit einer Anpassung der Heizleistung und mindestens einer Temperaturmessung und/oder einer Durchflussmessung.

Bei Kaffeemaschinen kann der Durchlauferhitzer so ausgelegt werden, dass er nach einer Verzögerungszeit von weniger als 7 Sekunden kontinuierlich Wasser mit einer Temperatur von über 90°C bereitstellen kann, beispielsweise mindestens 94°C, wobei die Eingangstemperatur des Wassers bei ca. 20°C liegt und das gleichzeitig im Kanal befindliche Wasservolumen kleiner 4000 mm³, vorzugsweise 2000 bis 3000mm³, insbesondere ca. 2500mm³ bzw. 2.5ml beträgt. Wenn im Kanal 2.5ml Wasser aufgenommen sind, so muss für 1dl Kaffee Wasser im Umfang des 40 fachen Kanalvolumens bereit gestellt werden. Nach dem Starten der Wassererhitzung wird während einer kurzen Aufheizzeit zuerst das im Kanal befindliche Wasser auf die gewünschte Temperatur erwärmt. Dabei genügt bereits eine elektrische Heizleistung von 1750 Watt oder weniger um das Wasser im Kanal innerhalb von 7 Sekunden auf die gewünschte Temperatur zu erhitzen. Anschliessend wird das Wasser mit der gewünschten Durchflussleistung durch den Durchlauferhitzer gefördert und beim Durchfluss auf die gewünschte Temperatur erwärmt. Der erfinderische Durchlauferhitzer kann dann mit einer reduzierten elektrischen Leistung die gewünschte Ausflussleistung von Wasser mit der gewünschten Temperatur gewährleisten.

Das kleine Kanalvolumen ist sehr vorteilhaft, weil dann für eine minimale gewünschte Durchflussmenge bereits eine so grosse Strömungsgeschwindigkeit verwendet wird, dass Kalk weniger abgelagert wird oder abgelagerte Teilchen mitgerissen werden. Zudem konnte mit Versuchen gezeigt werden, dass die gewünschte Temperatur äusserst genau eingehalten werden kann. Die Abweichungen von der gewünschten Temperatur liegen unterhalb von 1.5°C, insbesondere bei maximal 1°C. Diese Genauigkeit und Bereitstellung mit kleiner Wartezeit ist beispielsweise bei Kaffeemaschinen sehr vorteilhaft.

Es versteht sich von selbst, dass das Kanalvolumen und die Heizleistung an die jeweiligen Anforderungen angepasst werden können.

Bei anderen Getränkeautomaten oder bei Laborgeräten können andere Anforderungen an die Temperatur und die Durchflussleistung gegeben sein. Die jeweiligen Anforderungen mit den entsprechenden Vorgaben für die Überhitzungssicherung können mit der entsprechenden Auslegung des erfinderischen Durchlauferhitzers problemlos eingehalten werden.

Auch bei Anwendungen mit grossen Durchflussleistungen aber tieferen Temperaturen, wie beispielsweise bei einem Dusch-WC, wo pro Minute ca. 1l Waser auf 37°C benötigt wird, können erfindungsgemässe Durchlauferhitzer mit entsprechender Auslegung eingesetzt werden.

Damit der Durchlauferhitzer seine Leistung bzw. die Erhitzung des Fluids an eine gewünschte Fluid-Austrittstemperatur und insbesondere an einen jeweiligen Fluid-Durchfluss anpassen kann, wird er über eine Steuerung gespeist. Die Steuerung muss zumindest ein Ein-Aus-Signal erhalten, das festlegt, ob der Heizdraht elektrisch gespeist werden soll oder ob keine Wärme erzeugt werden soll. Wenn der Heizdraht elektrisch gespeist wird, so kann er entsprechend der fliessenden Stromstärke eine Heizleistung erzielen. Wenn die Temperatur des erhitzten Fluids wählbar sein soll und dies zudem für unterschiedliche Durchflüsse, so wird die Steuerung zusätzlich zum Ein-Aus-Signal zumindest noch ein weiteres Signal von einem Temperatursensor beim Ablauf des Durchlauferhitzers und/oder von einem Durchflusssensor und/oder von einem Temperatursensor beim Zulauf des Durchlauferhitzers erhalten und bei der Einstellung der Heizleistung berücksichtigen.

Aufgrund der hohen Effizienz und der schnellen Bereitstellung von warmem Wasser ist der erfindungsgemässe Durchlauferhitzer auch zum Erwärmen von über Wasserhähne oder Duschbrausen bezogenem Warmwasser geeignet. Weil der leistungsstarke Durchlauferhitzer kostengünstig hergestellt werden kann, ist es möglich alle Verbrauchsstellen mit einem Durchlauferhitzer auszustatten. Dabei kann die maximale Heizleistung auf den maximalen Warmwasserverbrauch (max. Temperatur, max. Durchfluss) einer Verbrauchsstelle ausgelegt werden, wobei für verschiedene Verbrauchsstellen wie Bad oder Küche die unterschiedlichen Ansprüche an die maximale Wassertemperatur und den maximalen Durchfluss berücksichtigt werden können.

Die jeweilige Erhitzung des Wassers kann an die vom Verbraucher gewählte Verbrauchstemperatur angepasst werden. Wenn die elektrische Speisung des Durchlauferhitzers über eine Steuerverbindung mit einer Einstellvorrichtung der Armatur der Verbrauchsstelle verbunden ist, so kann die Heizleistung genau an die gewählte Position der Einstellvorrichtung angepasst werden. Gegebenenfalls werden bei der Einstellung der Heizleistung auch noch eine Temperaturmessung beim Ablauf des Durchlauferhitzers und/oder eine Durchflussmessung verwendet. Der erfinderische Durchlauferhitzer ermöglicht es, dass Brauchwasser direkt mit einer sehr genau vorgegebenen Temperatur bereitgestellt wird. Wenn die Erwärmung des Brauchwassers vom Kaltwasser ausgeht, so kann auf einen zentralen Warmwasser-Vorratsbehälter und das parallele Verlegen von Warm- und Kaltwasserleitungen verzichtet werden. Es kann davon ausgegangen werden, dass der Aufwand für die bei den Verbrauchstellen benötigten Durchlauferhitzer kleiner ist als der Aufwand für den Warmwasser-Vorratsbehälter und die Warmwasserleitungen.

Die Überhitzungssicherung stellt sicher, dass kein überhitztes Wasser ausgetragen wird und dass anliegendes Material nicht soweit erhitzt wird, dass es beschädigt wird oder dass ein Brand ausgelöst wird.

Bei einer bevorzugten Ausführungsform ist die äussere Hülse bei einer Stirnseite mit einer haubenförmigen Abdeckung dicht verbunden. Diese Abdeckung umfasst einen der beiden Anschlüsse, welcher sich vorzugsweise in Richtung der Längsachse erstreckt und insbesondere im Zentrum der Abdeckung angeordnet ist. Diese Ausführungsform ist besonders vorteilhaft, wenn der Durchlauferhitzer Dampf erzeugen soll. Tests haben nämlich gezeigt, dass sich bei der Dampferzeugung Kalk erst am Ende des Kanals beim Austritt in einen radial vom Kanal wegführenden Anschluss ablagert. Die Abdeckung ermöglicht einen Austritt des Dampfes und natürlich auch von heissem Wasser in Richtung der Längsachse, bzw. ohne Umlenkung in eine zur Längsachse radiale Richtung. Die Abdeckung kann den Durchführbereich, bzw. den Kanal zwischen der inneren Hülse und der äusseren Hülse, über Umlenkungsbereiche mit genügend grossen Krümmungsradien mit dem Anschluss verbinden. Dadurch wird die Ablagerung von Kalk bei der Erzeugung von Heisswasser und von Dampf minimiert.

In einer weiteren vorteilhaften Ausführungsform umfasst der Durchlauferhitzer zur Kanalbildung ein federförmiges Zwischenteil, das zwischen die innere und die äussere Hülse eingesetzt ist. Damit das Zwischenteil in Richtung der Längsachse und gegebenenfalls in Umfangsrichtung in einer gewünschten Position gehalten ist, wird die äussere Hülse und/oder die haubenförmige Abdeckung an mindestens einer Stelle etwas radial nach innen verformt, so dass bei dieser Verformung das Zwischenteil festgeklemmt ist. Die haubenförmige Abdeckung weist gegebenenfalls auch noch einen Ausrichtungsanschlag, vorzugsweise eine Vertiefung auf. Bei der Montage wird der Ausrichtungsanschlag mit einem entsprechenden Ausrichtungselement in Eingriff gebracht.

Um schnell und mit genauer Temperatur heisses Wasser oder Dampf bereitzustellen ist das Ein- und Ausschalten von hohen elektrischen Heizleistungen nötig. Bei solchen hohen das elektrische Netz belastenden Leistungsänderungen können Störungen im Netz entstehen. Um solche Störungen zu verhindern wird gemäss einer weiteren vorteilhaften Ausführung das Heizelement in mindestens zwei Abschnitte unterteilt. Der Isolierkern umfasst auf der an der Mantelfläche ausgebildeten Trägerfläche vorzugsweise zwei Teilbereiche für Abschnitte des Heizelementes. Beide Abschnitte umfassen je einen aufgewickelten elektrischen Widerstandsdraht und diesen speisende elektrische Anschlussleitungen. An der Stirnseite des Durchlauferhitzers mit den elektrischen Anschlusskontakten sind somit mindestens drei Anschlusskontakte ausgebildet, nämlich die Speiseanschlüsse für die beiden Abschnitte und der Nullleiter. Die Heizdrähte beider Abschnitte sind je mit dem entsprechenden Speiseanschluss und dem Nullleiter verbunden. Dazu sind im Isolierkern entsprechende Bohrungen für die Leitungen ausgebildet.

Bei einem Durchlauferhitzer für Kaffeemaschinen ist es zweckmässig, wenn ein Abschnitt beispielsweise mit 1300 Watt und der andere mit 650 Watt betrieben werden kann. Die Heizleistung kann dann durch das nacheinander durchgeführte Ein- bzw. Ausschalten der beiden Abschnitte mit kleineren einzelnen Leistungsänderungen geändert werden. Dadurch kann die gewünschte Temperatur störungsfrei sehr genau eingestellt werden.

Weitere Einzelheiten der Erfindung ergeben sich an Hand der nachfolgenden Beschreibung eines in den Zeichnungen schematisch dargestellten Ausführungsbeispiels. Es zeigen:
- Fig. 1: einen Längsschnitt durch einen Durchlauferhitzer (A-A gemäss Fig. 2);
- Fig. 2: eine Ansicht der Stirnseite mit den elektrischen Anschlusskontakten;
- Fig. 3: einen Querschnitt B-B gemäss Fig. 1;
- Fig. 4: einen Querschnitt C-C gemäss Fig. 1;
- Fig. 5: eine perspektivische Darstellung des Durchlauferhitzers;
- Fig. 6: einen Längsschnitt durch einen Durchlauferhitzer mit einer haubenförmigen Abdeckung;
- Fig. 7: eine Seitenansicht des Durchlauferhitzers gemäss Fig. 6; und
- Fig. 8: eine perspektivische Darstellung des Durchlauferhitzers gemäss Fig. 6.

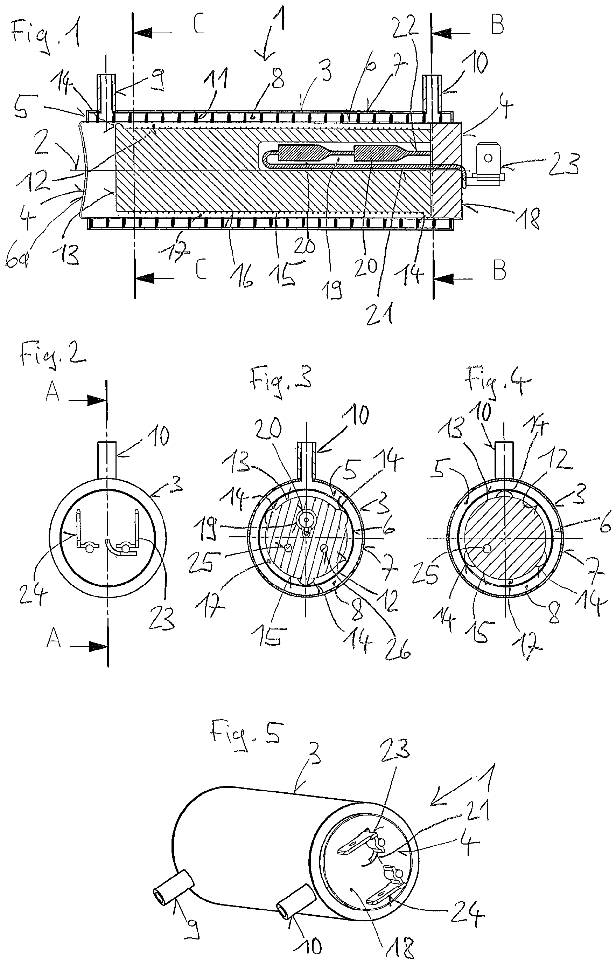

Fig. 1 bis 5 zeigen einen Durchlauferhitzer 1 mit einer sich um eine Längsachse 2 erstreckenden Aussenfläche 3 und zwei voneinander abgewandten quer zur Längsachse 2 verlaufenden Stirnseiten 4. Innen an die Aussenfläche 3 schliesst ein Durchführbereich 5 für ein zu erhitzendes Fluid an. Bei der dargestellten Ausführungsform umfasst der Durchführbereich 5 eine innere Hülse 6 und eine äussere Hülse 7, wobei diese beiden Hülsen 6, 7 bei den beiden Stirnseiten 4 dicht miteinander verbunden sind. Zwischen der inneren und der äusseren Hülse 6, 7 ist ein Kanal 8 ausgebildet, der zwischen zwei Anschlüssen 9 und 10 um die Längsachse 2 gewendelt verläuft und dazu mindestens eine gewendelte Führungswand 11 umfasst. Die gewendelte Führungswand 11 erstreckt sich im Längs- und im Querschnitt in einer radialen Richtung von einem Bereich bei der Aussenfläche 3 gegen einen Bereich bei einer Übergangsfläche 12 an der gegen die Längsachse 2 gerichteten Innenseite der inneren Hülse 6.

In der dargestellten Ausführungsform ist die gewendelte Führungswand 11 an der äusseren Hülse ausgebildet, bzw. der Kanal 8 ist so in die äussere Hülse 7 eingearbeitet, dass die Führungswand 11 von der Aussenfläche 3 gegen die Längsachse 2 vorsteht. Es wäre auch möglich, dass die Führungswand 11 an der Aussenseite der inneren Hülse 6 ausgebildet oder als Zwischenteil zwischen die innere und die äussere Hülse 6, 7 eingesetzt ist.

In der inneren Hülse 6, bzw. innerhalb der Übergangsfläche 12, ist ein Isolierkern 13 angeordnet, dessen Mantelfläche eine Trägerfläche 15 für ein Heizelement 16 in der Form eines auf die Trägerfläche 15 aufgewickelten elektrischen Widerstandsdrahts bildet. Das Heizelement 16 bzw. der vom einen zum anderen stirnseitigen Ende des Isolierkerns 13 auf die Trägerfläche 14 aufgewickelte Widerstandsdraht ist somit ein elektrischer Heizwendel. Das Heizelement 16 bildet zusammen mit dem zwischen der Trägerfläche 15 und der Übergangsfläche 12 angeordneten wärmeleitenden Material eine Heizschicht 17.

Zur optimalen Positionierung bzw. Zentrierung umfasst der Isolierkern 13 bei beiden axialen Enden je zumindest drei in im Wesentlichen gleichmässigen Abständen entlang des Umfangs verteilte radial über die Trägerfläche vorstehende Distanzhalter 14, welche einen Abstand zwischen der Trägerfläche 15 und der inneren Hülse sicherstellen. Auch bei einer kleinen Mächtigkeit der Heizschicht 17 wird ein direkter Kontakt zwischen dem elektrischen Heizelement und der inneren Hülse verhindert. Sowohl der Isolierkern 13 als auch das wärmeleitende Material der Heizschicht 17 weisen einen genügend hohen elektrischen Widerstand auf, so dass der zugeführte Strom nur durch den Heizdraht fliesst.

In der dargestellten Ausführungsform ist die innere Hülse 6 aus Metall gebildet und bei einer Stirnseite 4 mit einer metallischen Stirnfläche 6a becherförmig abgeschlossen. Zwischen der inneren Hülse 6 und dem Isolierkern 13 ist pulverförmiges wärmeleitendes und elektrisch isolierendes Material, beispielsweise Magnesiumoxyd, eingefüllt. Um die gewünschte hohe Wärmeleitfähigkeit zu erzielen, wird das pulverförmige Material verdichtet. Das Volumen der gefüllten innere Hülse kann mit einem Walzverfahren durch radiales Verengen und/oder durch das Eindrücken der Stirnfläche 6a verkleinert werden, so dass das pulverförmige Material verdichtet und die Leerräume verdrängt werden. Bei der von der metallischen Stirnfläche 6a abgewandten Stirnseite 4 wird ein abschliessender Pfropfen 18 angebracht.

Der Isolierkern 13 umfasst einen sich in Richtung der Längsachse 2 erstreckenden Hohlraum 19. In diesem Hohlraum 19 sind in einem Abschnitt der Längsachse 2 mit einem aussen an der Trägerfläche 15 angeordneten Heizelement 16 zwei Überhitzungssicherungen 20 in Serie angeordnet. Eine erste elektrische Verbindungsseite dieser Überhitzungssicherungen ist über eine erste Leitung 21 mit einem an der Stirnseite 4 mit dem Pfropfen 18 angeordneten ersten elektrischen Anschlusskontakt 23 verbunden. Eine zweite elektrische Verbindungsseite der Überhitzungssicherungen 20 ist über eine zweite Leitung 22 beim Pfropfen 18 mit einem nicht dargestellten ersten Kontakt des elektrischen Heizelements 16 verbunden.

An der Stirnseite 4 mit dem ersten elektrischen Anschlusskontakt 23 ist auch ein zweiter elektrischer Anschlusskontakt 24 angeordnet, welcher mit einem zweiten Kontakt des elektrischen Heizelements 16 verbunden ist. Zur Durchführung einer elektrischen Leitung vom zweiten elektrischen Anschlusskontakt 24 zum zweiten Kontakt des elektrischen Heizelements 16 beim Isolierkern-Ende, das der Stirnfläche 6a zugewandt ist, ist im Isolierkern 13 eine sich parallel zur Längsachse 2 erstreckende Bohrung 25 ausgebildet. Diese Bohrung 25 kann auch zur Fixierung des ersten elektrischen Anschlusskontakts 23 verwendet werden. Zur Fixierung des zweiten elektrischen Anschlusskontakts 24 umfasst der Isolierkern 13 bei der Stirnseite 4 mit dem Pfropfen 18 eine Einstecköffnung 26.

Im Betriebszustand gelangt die vom Heizelement 16 erzeugte Wärme durch die dünne Heizschicht 17 mit dem wärmeleitenden Material nur unwesentlich verzögert und reduziert zum Durchführbereich 5. In den Isolierkern 13 mit der kleineren Wärmeleitfähigkeit fliesst nur ein kleiner Anteil der Wärme. Wenn nun aber aufgrund einer Störung die Wärme im Durchführbereich 5 nicht vom zu erhitzenden Fluid aufgenommen wird, so gelangt zunehmend auch Wärme in den Isolierkern 13 und damit zu den Überhitzungssicherungen 20. Um die Wärmeleitung vom Isolierkern zu den Überhitzungssicherungen 20 zu verbessern, wird vorzugsweise im Hohlraum 19 um die Überhitzungssicherungen 20 wärmeleitendes Material eingefüllt.

Der Hohlraum 19 des Isolierkerns 13 weist eine Hohlraumachse auf, die in einem Abstand zur zentralen Längsachse 2 des Isolierkerns 13 verläuft, so dass der kleinste Abstand zwischen den im Hohlraum 19 angeordneten Überhitzungssicherungen 20 und dem nächstgelegenen Bereich des elektrischen Heizelements 16 einem vorgegebenen Abstand entspricht. Mit der Wahl dieses Abstandes kann die Verzögerung bzw. Dämpfung des Wärmezuflusses zu den Überhitzungssicherung 20 beeinflusst werden. Die Empfindlichkeit der Überhitzungssicherungen 20 wird auch entsprechend dem gewählten Abstand gewählt.

In der dargestellten Ausführungsform sind die Aussenfläche 3, die Übergangsfläche 12, sowie die Trägerfläche 15 jeweils im Wesentlichen zylindermantelförmig mit einem kreisförmigen Querschnitt ausgebildet. Der Radius von der Längsachse 2 zur Trägerfläche 15 erstreckt sich mindestens über 70%, insbesondere mindestens über 80%, des Radius von der Längsachse 2 zur Übergangsfläche 12.

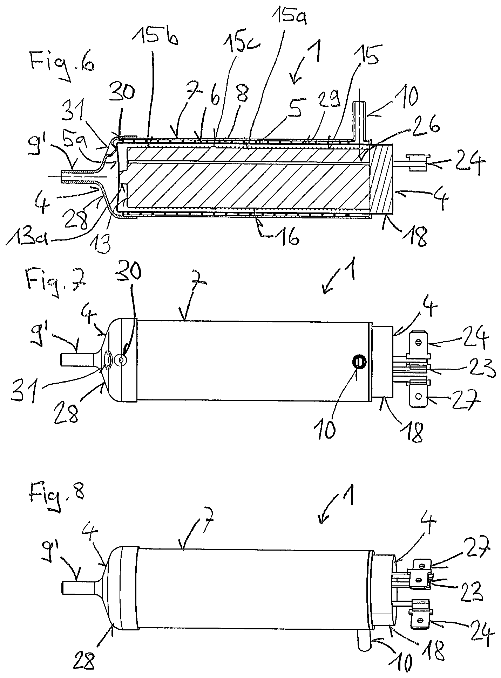

Fig. 6 bis 8 zeigen einen Durchlauferhitzer 1 mit einer haubenförmigen Abdeckung 28. Die äussere Hülse 7 ist bei einer Stirnseite 4 mit der haubenförmigen Abdeckung 28 dicht verbunden. Diese Abdeckung 28 umfasst den Anschluss 9', welcher sich in Richtung der Längsachse erstreckt und im Zentrum der Abdeckung 28 ausgebildet ist. Die Abdeckung 28 verbindet den Durchführbereich 5, bzw. den Kanal 8 zwischen der inneren Hülse 6 und der äusseren Hülse 7 über Umlenkungsbereiche mit genügend grossen Krümmungsradien mit dem Anschluss 9'.

Zur Kanalbildung umfasst der Durchlauferhitzer 1 ein federförmiges Zwischenteil 29, das zwischen die innere und die äussere Hülse 6, 7 eingesetzt ist. Damit das Zwischenteil 29 in Richtung der Längsachse und gegebenenfalls in Umfangsrichtung in einer gewünschten Position gehalten ist, wird nach der gewünschten Positionierung des Zwischenteils 29 an der haubenförmigen Abdeckung 28 mindesten eine Delle 30 ausgebildet, so dass das Zwischenteil 29 festgeklemmt ist. Die haubenförmige Abdeckung 28 weist auch noch einen Ausrichtungsanschlag in der Form einer Vertiefung 31 auf. Bei der Montage wird die Vertiefung 31 mit einem entsprechenden Ausrichtungselement in Eingriff gebracht.

Fig. 6 bis 8 zeigen eine Ausführung, bei der das Heizelement 16 in zwei Abschnitte unterteilt ist. Der Isolierkern 13 umfasst auf der an der Mantelfläche ausgebildeten Trägerfläche 15 zwei Teilbereiche 15a und 15b, welche bei einer radialen Erhöhung 15c voneinander getrennt sind. Auf beide Teilbereiche 15a und 15b ist je ein elektrischer Widerstandsdraht aufgewickelt. Beide aufgewickelten Widerstandsdrähte sind je über speisende elektrische Anschlussleitungen mit einem Paar von Anschlusskontakten 23, 24 oder 27 verbunden, wobei der Anschlusskontakt 27 für den zweiten Abschnitt vorgesehen ist. Die elektrischen Anschlussleitungen von den Enden der Widerstandsdrähte zu den drei Anschlusskontakten 23, 24 und 27 sind in entsprechenden Bohrungen 25, 26 durch den Isolierkern 13 geführt. Eine elektrische Anschlussleitung wird bei dem von den Anschlusskontakten 23, 24 und 27 abgewandten Ende des Isolierkerns 13 zur Bohrung 26 geführt. Damit diese elektrische Anschlussleitung nicht in Kontakt zur metallischen Stirnfläche 5a der inneren Hülse 5 gelangen kann, umfasst der Isolierkern 13 einen zentral gegen diese Stirnfläche vorstehenden Vorsprung 13a. Der Isolierkern 13 kann somit beim Zusammenstellen des Durchlauferhitzers 1 soweit in die innere Hülse 5 eingeschoben werden, bis der Vorsprung 13a ansteht. Dadurch ist immer die richtige Positionierung gewährleistet.

## Patentansprüche

1. Durchlauferhitzer (1) mit einer sich um eine Längsachse (2) erstreckenden Aussenfläche (3) und zwei voneinander abgewandten quer zur Längsachse (2) verlaufenden Stirnseiten (4), mit einem innen an die Aussenfläche (3) anschliessenden Durchführbereich (5) für ein zu erhitzendes Fluid, mit einer bei einer Übergangsfläche (12) innen an den Durchführbereich (5) anschliessenden Heizschicht (17), die ein elektrisches Heizelement (16) und wärmeleitendes Material umfasst, mit einem Isolierkern (13), der sich zentrisch entlang der Längsachse (2) erstreckt und aussen eine Trägerfläche (15) für das elektrische Heizelement (16) und das wärmeleitende Material bildet, wobei die Wärmeleitfähigkeit des Isolierkerns (13) kleiner ist als jene des wärmeleitenden Materials, der Durchführbereich (5) bei der Übergangsfläche (12) eine innere Hülse (6), bei der Aussenfläche (3) eine äusseren Hülse (7) und zwischen der inneren und der äusseren Hülse (6, 7) mindestens einen Kanal (8) umfasst, der sich zwischen zwei Anschlüssen (9, 10) erstreckt, um die Längsachse (2) gewendelt verläuft und dazu mindestens eine gewendelte Führungswand (11) umfasst, die sich von der Aussenfläche (3) gegen die Übergangsfläche (12) erstreckt und einen rechteckigen Kanal-Querschnitt mit zwei langen Seiten bei den Hülsen (6, 7) und zwei kurzen Seiten bei der Führungswand (11) festlegt, **dadurch gekennzeichnet, dass** beim Querschnitt des gewendelten Kanals (8) die Länge der kurzen, radial verlaufenden Seiten kleiner als 1mm ist, vorzugsweise im Bereich von 0.8mm bis 0.4mm liegt, und insbesondere die langen Seiten mindestens sechsmal so gross sind wie die kurzen Seiten, und dass zwischen der inneren Hülse (6) und dem Isolierkern (13) das wärmeleitende Material pulverförmig eingefüllt und verpresst ist, das wärmeleitende Material eine Wärmeleitfähigkeit über 5 Wm⁻¹K⁻¹ aufweist, und der elektrische Widerstand des wärmeleitenden Materials bei 20°C bis 120°C grösser als 10⁶ Ωm ist, so dass vom Heizelement (16) abgegebene Wärme ohne störenden Zeitverzug zum Durchführbereich (5) gelangt und das elektrische Heizelement (16) elektrisch isoliert ist.

2. Durchlauferhitzer (1) nach Anspruch 1, **dadurch gekennzeichnet, dass** bei beiden axialen Enden des Isolierkerns (13) in je zumindest drei im Wesentlichen in gleichmässigen Abständen entlang des Umfangs verteilten Bereichen radial über die Trägerfläche (15) vorstehende Distanzhalter (14) vorhanden sind, welche eine zentrale Positionierung des Isolierkerns (13) innerhalb der inneren Hülse (6) sicherstellen und auch bei einer kleinen Mächtigkeit der Heizschicht (17) einen direkten Kontakt zwischen dem elektrischen Heizelement (16) und der inneren Hülse (6) verhindern.

3. Durchlauferhitzer (1) nach einem der Ansprüche 1 oder 2, **dadurch gekennzeichnet, dass** der Isolierkern (13) Silikatkeramik und/oder Oxidkeramik und/oder Nichtoxidkeramik umfasst, wobei das Keramikmaterial geformt und mittels Sintern zum Isolierkern (13) verdichtet ist, die Wärmeleitfähigkeit des Isolierkerns (13) maximal halb so gross ist wie die Wärmeleitfähigkeit des wärmeleitenden Materials, der Isolierkern (13) vorzugsweise Keramikmaterial umfasst dessen Wärmeleitfähigkeit kleiner ist als 5 Wm⁻¹K⁻¹, insbesondere kleiner als 3 Wm⁻¹K⁻¹, und dessen elektrischer Widerstand bei 20°C bis 120°C vorzugsweise grösser als 10⁶ Ωm, insbesondere grösser als 10⁹ Ωm ist.

4. Durchlauferhitzer (1) nach einem der Ansprüche 1 bis 3, **dadurch gekennzeichnet, dass** die Aussenfläche (3), die Übergangsfläche (12), sowie die Trägerfläche (15) jeweils im Wesentlichen zylindermantelförmig mit einem kreisförmigen Querschnitt ausgebildet sind, wobei sich der Radius von der Längsachse (2) zur Trägerfläche (15) vorzugsweise mindestens über 70%, insbesondere mindestens über 80%, des Radius von der Längsachse (2) zur Übergangsfläche (12) erstreckt.

5. Durchlauferhitzer (1) nach einem der Ansprüche 1 bis 5, **dadurch gekennzeichnet, dass** der Isolierkern (13) einen sich in Richtung der Längsachse (2) erstreckenden Hohlraum (19) umfasst und dass in diesem Hohlraum (19) in einem Abschnitt der Längsachse (2) mit einem aussen an der Trägerfläche (15) angeordneten Heizelement (16), mindestens eine Überhitzungssicherung (20) angeordnet ist, welche auf einer elektrischen Verbindungsseite mit einem an einer Stirnseite (4) angeordneten ersten elektrischen Anschlusskontakt (23) und auf der anderen elektrischen Verbindungsseite mit einem ersten Kontakt des elektrischen Heizelements (16) verbunden ist, wobei vorzugsweise der Hohlraum (19) des Isolierkerns (13) eine Hohlraumachse aufweist, die in einem Abstand zur zentralen Längsachse (2) des Isolierkerns (13) verläuft, so dass der kleinste Abstand zwischen der im Hohlraum (19) angeordneten mindestens einen Überhitzungssicherung (20) und dem nächstgelegenen Bereich des elektrischen Heizelements (16) einem vorgegebenen Abstand entspricht.

6. Durchlauferhitzer (1) nach Anspruch 5, **dadurch gekennzeichnet, dass** an der Stirnseite (4) mit dem ersten elektrischen Anschlusskontakt (23) auch ein zweiter elektrischer Anschlusskontakt (24) angeordnet ist, welcher mit einem zweiten Kontakt des elektrischen Heizelements (16) verbunden ist, wobei im Isolierkern eine sich parallel zur Längsachse erstreckende Bohrung (25) ausgebildet ist, durch welche eine elektrische Verbindung von einem Kontakt des Heizelements (16) gegen einen der beiden elektrischen Anschlusskontakte (23, 24) geführt ist.

7. Durchlauferhitzer (1) nach einem der Ansprüche 1 bis 6, **dadurch gekennzeichnet, dass** das Heizelement (16) von einem Widerstandsdraht gebildet wird, der als elektrischer Heizwendel vom einen zum anderen stirnseitigen Ende des Isolierkerns (13) auf die Trägerfläche (15) des Isolierkerns (13) aufgewickelt ist und der Isolierkern (13) aufgrund eines genügend hohen elektrischen Widerstands elektrisch isolierend ist.

8. Durchlauferhitzer (1) nach einem der Ansprüche 1 bis 7, **dadurch gekennzeichnet, dass** die innere Hülse (6) bei einer Stirnseite (4) mit einer Stirnfläche (6a) becherförmig abgeschlossen ist und auf der davon abgewandten Stirnseite (4) mit dem ersten elektrischen Anschlusskontakt (23) einen abschliessenden Pfropfen (18) umfasst.

9. Durchlauferhitzer (1) nach einem der Ansprüche 1 bis 8, **dadurch gekennzeichnet, dass** der elektrische Widerstand des wärmeleitenden Materials bei 20°C bis 120°C grösser als 10⁹ Ωm ist und/oder das wärmeleitende Material zwischen dem elektrischen Heizelement (16) und der Übergangsfläche (12) eine Mächtigkeit von maximal 4 mm oder gegebenenfalls von maximal 2 mm aufweist, so dass vom Heizelement (16) abgegebene Wärme ohne störenden Zeitverzug zum Durchführbereich (5) gelangt und das elektrische Heizelement (16) elektrisch isoliert ist.

10. Durchlauferhitzer (1) nach einem der Ansprüche 1 bis 9, **dadurch gekennzeichnet, dass** die gewendelte Führungswand (11) an der äusseren Hülse (7) oder gegebenenfalls an der inneren Hülse (6) ausgebildet oder vorzugsweise als Zwischenteil zwischen die innere und die äussere Hülse (6, 7) eingesetzt ist.

11. Durchlauferhitzer (1) nach einem der Ansprüche 1 bis 10, **dadurch gekennzeichnet, dass** die äussere Hülse (7) bei mindestens einer Stirnseite (4) dicht mit der inneren Hülse (6) verbunden ist.

12. Durchlauferhitzer (1) nach einem der Ansprüche 1 bis 11, **dadurch gekennzeichnet, dass** die äussere Hülse (7) bei einer Stirnseite (4) mit einer haubenförmigen Abdeckung dicht verbunden ist und die Abdeckung einen der beiden Anschlüsse (9, 10) umfasst, welcher sich vorzugsweise in Richtung der Längsachse erstreckt und insbesondere im Zentrum der Abdeckung angeordnet ist.

13. Durchlauferhitzer (1) nach einem der Ansprüche 1 bis 12, **dadurch gekennzeichnet, dass** auf der Trägerfläche des Isolierkerns mindestens zwei Abschnitte des Heizelementes angeordnet sind, welche je einen aufgewickelten elektrischen Widerstandsdraht und diesen speisende elektrische Anschlussleitungen umfassen.

14. Durchlauferhitzer (1) nach einem der Ansprüche 1 bis 13, **dadurch gekennzeichnet, dass** er mit einer Steuerung die elektrische Speisung des elektrischen Heizelementes (16) kontrollierbar macht, wobei die Steuerung zumindest festlegt, ob das Heizelement (16) elektrisch gespeist werden soll oder ob keine Wärme erzeugt werden soll.

15. Durchlauferhitzer (1) nach Anspruch 14, **dadurch gekennzeichnet, dass** die Steuerung so eingerichtet ist, dass der Durchlauferhitzer (1) die jeweilige Erhitzung des Wassers an eine wählbare Verbrauchstemperatur anpassbar macht, nämlich mit einer Anpassung der Heizleistung und mindestens einer Temperaturmessung und/oder einer Durchflussmessung.

## Claims

1. Throughflow heater (1) having an outer surface (3) extending around a longitudinal axis (2) and two end faces (4) facing away from each other and extending transversely to the longitudinal axis (2), a lead-through area (5) adjoining the outer surface (3) on the inside for a fluid to be heated, a heating layer (17) adjoining the lead-through area (5) on the inside at a transition surface (12), said heating layer comprising an electric heating element (16) and heat-conducting material, an insulating core (13) extending centrally along the longitudinal axis (2) and forming on the outer side a support surface (15) for the electric heating element (16) and the heat-conducting material, wherein the thermal conductivity of the insulating core (13) is lower than that of the heat-conducting material, the lead-through area (5) comprises an inner sleeve (6) at the transition surface (12), an outer sleeve (7) at the outer surface (3), and between the inner and the outer sleeve (6, 7) at least one channel (8) which extends between two terminals (9, 10) and coils around the longitudinal axis (2) and comprises at least one coiled guide wall (11) which extends from the outer surface (3) to the transition surface (12) and defines a rectangular channel cross-section with two long sides at the sleeves (6, 7) and two short sides at the guide wall (11), **characterized in that**, in the cross-section of the coiled channel (8), the length of the short, radially extending sides is smaller than 1 mm, preferably in the range from 0.8 mm to 0.4 mm, and in particular the long sides are at least six times as large as the short sides, and **in that** the heat-conducting material is introduced in powder form between the inner sleeve (6) and the insulating core (13) and is compressed, the heat-conducting material has a thermal conductivity above 5 Wm⁻¹K⁻¹, and the electrical resistance of the heat-conducting material at 20°C to 120°C is greater than 10⁶ Qm, so that heat emitted by the heating element (16) reaches the lead-through area (5) without any disruptive time delay and the electric heating element (16) is electrically insulated.

2. Throughflow heater (1) according to claim 1, **characterized in that** spacers (14) which protrude radially beyond the support surface (15) are provided at both axial ends of the insulating core (13) in each case in at least three areas which are distributed at substantially regular intervals along the circumference, which spacers ensure a central positioning of the insulating core (13) within the inner sleeve (6) and prevent direct contact between the electric heating element (16) and the inner sleeve (6) even when the heating layer (17) has a small thickness.

3. Throughflow heater (1) according to one of claims 1 or 2, **characterized in that** the insulating core (13) comprises silicate ceramic and/or oxide ceramic and/or non-oxide ceramic, wherein the ceramic material is shaped and compacted by means of sintering to form the insulating core (13), the thermal conductivity of the insulating core (13) is at most half as large as the thermal conductivity of the heat-conducting material, the insulating core (13) preferably comprises ceramic material having a thermal conductivity less than 5 Wm⁻¹K⁻¹, in particular less than 3 Wm⁻¹K⁻¹, and having an electrical resistance at 20°C to 120°C that is preferably greater than 10⁶ Ωm, in particular greater than 10⁹ Ωm.

4. Throughflow heater (1) according to one of claims 1 to 3, **characterized in that** the outer surface (3), the transition surface (12) and the support surface (15) are each formed substantially in the shape of a cylindrical shell with a circular cross-section, wherein the radius from the longitudinal axis (2) to the support surface (15) preferably extends at least over 70%, in particular at least over 80%, of the radius from the longitudinal axis (2) to the transition surface (12).

5. Throughflow heater (1) according to one of claims 1 to 5, **characterized in that** the insulating core (13) comprises a cavity (19) extending in the direction of the longitudinal axis (2), and **in that** at least one overheating protection device (20) is arranged in this cavity (19), in a section of the longitudinal axis (2) with a heating element (16) arranged on the outer side on the support surface (15), which overheating protection device is connected on one electrical connection side to a first electrical connection contact (23) arranged at one end face (4) and on the other electrical connection side to a first contact of the electric heating element (16), wherein preferably the cavity (19) of the insulating core (13) has a cavity axis which extends at a distance from the central longitudinal axis (2) of the insulating core (13), so that the smallest distance between the at least one overheating protection device (20) arranged in the cavity (19) and the nearest region of the electric heating element (16) corresponds to a predefined distance.

6. Throughflow heater (1) according to claim 5, **characterized in that** a second electrical connection contact (24) is also arranged on the end face (4) having the first electrical connection contact (23), which second electrical connection contact is connected to a second contact of the electric heating element (16), wherein a bore (25) extending parallel to the longitudinal axis is formed in the insulating core, through which bore an electrical connection is guided from a contact of the heating element (16) to one of the two electrical connection contacts (23, 24).

7. Throughflow heater (1) according to one of claims 1 to 6, **characterized in that** the heating element (16) is formed by a resistance wire which is wound as an electric heating coil on the support surface (15) of the insulating core (13) from one end face to the other end face of the insulating core (13), and the insulating core (13) is electrically insulating due to a sufficiently high electrical resistance.

8. Throughflow heater (1) according to one of claims 1 to 7, **characterized in that** the inner sleeve (6) is closed off in a cup-shaped manner by an end surface (6a) at one end face (4) and comprises a terminating stopper (18) on the end face (4) remote therefrom having the first electrical connection contact (23).

9. Throughflow heater (1) according to one of claims 1 to 8, **characterized in that** the electrical resistance of the heat-conducting material at 20°C to 120°C is greater than 10⁹ Ωm and/or the heat-conducting material between the electric heating element (16) and the transition surface (12) has a thickness of at most 4 mm or optionally of at most 2 mm, so that heat emitted by the heating element (16) reaches the lead-through area (5) without any disruptive time delay and the electric heating element (16) is electrically insulated.

10. Throughflow heater (1) according to one of claims 1 to 9, **characterized in that** the coiled guide wall (11) is formed on the outer sleeve (7) or optionally on the inner sleeve (6) or preferably is inserted as an intermediate part between the inner and the outer sleeve (6, 7).

11. Throughflow heater (1) according to one of claims 1 to 10, **characterized in that** the outer sleeve (7) is tightly connected to the inner sleeve (6) at least at one end face (4).

12. Throughflow heater (1) according to one of claims 1 to 11, **characterized in that** the outer sleeve (7) is tightly connected to a hood-shaped cover at one end face (4) and the cover comprises one of the two terminals (9, 10), which preferably extends in the direction of the longitudinal axis and is arranged in particular in the centre of the cover.

13. Throughflow heater (1) according to one of claims 1 to 12, **characterized in that** at least two sections of the heating element are arranged on the support surface of the insulating core, which sections each comprise a wound electrical resistance wire and electrical connecting leads supplying power thereto.

14. Throughflow heater (1) according to one of claims 1 to 13, **characterized in that** it makes it possible to control, by means of a controller, the electrical power supply to the electric heating element (16), wherein the controller ascertains at least whether the heating element (16) is to be supplied with electrical power or whether no heat is to be generated.

15. Throughflow heater (1) according to claim 14, **characterized in that** the controller is configured such that the throughflow heater (1) makes it possible to adapt the respective heating of the water to a selectable use temperature, namely by adapting the heating power and measuring at least a temperature and/or a flow rate.

## Revendications

1. Chauffe-eau instantané (1) avec une surface extérieure (3) qui s'étend autour d'un axe longitudinal (2) et deux faces d'extrémité (4) écartées l'une de l'autre qui s'étendent transversalement par rapport à l'axe longitudinal (2), avec une zone de passage (5) pour un fluide à chauffer qui se raccorde sur l'intérieur à la surface extérieure (3), avec une couche chauffante (17) qui se raccorde sur l'intérieur à la zone de passage (5) au niveau d'une surface de transition (12) et qui comprend un élément chauffant électrique (16) et un matériau caloporteur, avec un coeur isolant (13) qui s'étend au centre le long de l'axe longitudinal (2) et forme sur l'extérieur une surface porteuse (15) pour l'élément chauffant électrique (16) et le matériau caloporteur, dans lequel la conductibilité thermique du coeur isolant (13) est inférieure à celle du matériau caloporteur, la zone de passage (5) comprend au niveau de la surface de transition (12) une douille intérieure (6), au niveau de la surface extérieure (3) une douille extérieure (7) et entre les douilles intérieure et extérieure (6, 7) au moins un conduit (8) qui s'étend entre deux raccords (9, 10), suit un trajet en spirale autour de l'axe longitudinal (2) et comprend en outre au moins une paroi de guidage (11) en spirale qui s'étend de la surface extérieure (3) vers la surface de transition (12) et définit une section de conduit rectangulaire avec deux grands côtés au niveau des douilles (6, 7) et deux petits côtés au niveau de la paroi de guidage (11), **caractérisé en ce que** dans la section du conduit en spirale (8), la longueur des petits côtés orientés dans le sens radial est inférieure à 1 mm, de préférence comprise entre 0,8 mm et 0,4 mm, et en particulier, les grands côtés sont au moins six fois plus grands que les petits côtés, et **en ce que** le matériau caloporteur est introduit sous forme de poudre et pressé entre la douille intérieure (6) et le coeur isolant (13), le matériau caloporteur présente une conductibilité thermique supérieure à 5 Wm⁻¹K⁻¹ et la résistance électrique du matériau caloporteur est supérieure à 10⁶ Ωm entre 20 °C et 120 °C, de sorte que la chaleur dégagée par l'élément chauffant (16) parvient sans retard perturbateur à la zone de passage (5) et l'élément chauffant électrique (16) est isolé électriquement.

2. Chauffe-eau instantané (1) selon la revendication 1, **caractérisé en ce que** sont prévus aux deux extrémités axiales du coeur isolant (13), dans au moins trois zones réparties sur la circonférence à au moins trois intervalles sensiblement égaux de chaque côté, des éléments d'écartement (14) qui dépassent dans le sens radial de la surface porteuse (15), qui assurent un positionnement centré du coeur isolant (13) dans la douille intérieure (6) et empêchent, même avec une petite épaisseur de la couche chauffante (17), un contact direct entre l'élément chauffant électrique (16) et la douille intérieure (6).

3. Chauffe-eau instantané (1) selon l'une des revendications 1 ou 2, **caractérisé en ce que** le coeur isolant (13) comprend une céramique à base de silicate ou une céramique à base d'oxyde et/ou une céramique à base de matériau non oxyde, lequel matériau céramique est moulé et compacté par frittage pour produire le coeur isolant (13), la conductibilité thermique du coeur isolant (13) est au maximum de la moitié de la conductibilité thermique du matériau caloporteur, le coeur isolant (13) comprend de préférence un matériau céramique dont la conductibilité thermique est inférieure à 5 Wm⁻¹K⁻¹, en particulier inférieure à 3 Wm⁻¹K⁻¹, et sa résistance électrique entre 20 °C et 120 °C est de préférence supérieure à 10⁶ Ωm, en particulier supérieure à 10⁹ Ωm.

4. Chauffe-eau instantané (1) selon l'une des revendications 1 à 3, **caractérisé en ce que** la surface extérieure (3), la surface de transition (12) et la surface porteuse (15) sont conformées chacune comme une enveloppe sensiblement cylindrique de section circulaire, le rayon entre l'axe longitudinal (2) et la surface porteuse (15) s'étendant de préférence au moins sur 70 %, en particulier au moins sur 80 %, du rayon entre l'axe longitudinal (2) et la surface de transition (12).

5. Chauffe-eau instantané (1) selon l'une des revendications 1 à 5, **caractérisé en ce que** le coeur isolant (13) comprend une cavité (19) qui s'étend dans la direction de l'axe longitudinal (2) et **en ce qu'**est disposée dans cette cavité (19), dans un segment de l'axe longitudinal (2) comportant un élément chauffant (16) disposé à l'extérieur sur la surface porteuse (15), au moins une sécurité contre la surchauffe (20) qui est connectée sur un premier côté de connexion électrique à un premier contact de connexion électrique (23) disposé sur une face d'extrémité (4) et sur l'autre côté de connexion électrique à un premier contact de l'élément chauffant électrique (16), la cavité (19) du coeur isolant (13) présentant de préférence un axe de cavité qui passe à distance de l'axe longitudinal (2) central du coeur isolant (13), de sorte que le plus petit écart entre l'au moins une sécurité contre la surchauffe (20) disposée dans la cavité (19) et la zone la plus proche de l'élément chauffant électrique (16) corresponde à une distance prédéterminée.

6. Chauffe-eau instantané (1) selon la revendication 5, **caractérisé en ce qu'**est disposé aussi sur la face d'extrémité (4) comportant le premier contact de connexion électrique (23) un deuxième contact de connexion électrique (24) qui est connecté à un deuxième contact de l'élément chauffant électrique (16), un alésage (25) parallèle à l'axe longitudinal, à travers lequel passe une connexion électrique d'un contact de l'élément chauffant (16) vers l'un des deux contacts de connexion électriques (23, 24), étant formé dans le coeur isolant.

7. Chauffe-eau instantané (1) selon l'une des revendications 1 à 6, **caractérisé en ce que** l'élément chauffant (16) est formé par un fil de résistance qui est enroulé comme une spirale chauffante d'une face d'extrémité du coeur isolant (13) à l'autre sur la surface portante (15) du coeur isolant (13) et le coeur isolant (13) est électriquement isolant parce que sa résistance électrique est suffisamment élevée.

8. Chauffe-eau instantané (1) selon l'une des revendications 1 à 7, **caractérisé en ce que** la douille intérieure (6) est fermée au niveau d'une face d'extrémité (4) avec une surface d'extrémité (6a) en forme de godet et comprend sur la face d'extrémité (4) distante de celle-ci comportant le premier contact de connexion électrique (23) un bouchon de fermeture (18).

9. Chauffe-eau instantané (1) selon l'une des revendications 1 à 8, **caractérisé en ce que** la résistance électrique du matériau caloporteur entre 20 °C et 120 °C est supérieure à 10⁹ Ωm et/ou le matériau caloporteur entre l'élément chauffant électrique (16) et la surface de transition (12) présente une épaisseur de 4 mm au maximum ou le cas échéant de 2 mm au maximum, de sorte que la chaleur dégagée par l'élément chauffant (16) parvient sans retard perturbateur à la zone de passage (5) et l'élément chauffant électrique (16) est isolé électriquement.

10. Chauffe-eau instantané (1) selon l'une des revendications 1 à 9, **caractérisé en ce que** la paroi de guidage (11) en spirale est formée sur la douille extérieure (7) ou éventuellement sur la douille intérieure (6) ou de préférence insérée comme une pièce intercalaire entre les douilles intérieure et extérieure (6, 7).

11. Chauffe-eau instantané (1) selon l'une des revendications 1 à 10, **caractérisé en ce que** la douille extérieure (7) est reliée de façon hermétique à la douille intérieure (6) au niveau d'au moins une face d'extrémité (4).

12. Chauffe-eau instantané (1) selon l'une des revendications 1 à 11, **caractérisé en ce que** la douille extérieure (7) est reliée de façon hermétique à une couverture en forme de capuchon au niveau d'une face d'extrémité (4) et la couverture comprend l'un des deux raccords (9, 10), qui s'étend de préférence dans la direction de l'axe longitudinal et qui est disposé en particulier au centre de la couverture.

13. Chauffe-eau instantané (1) selon l'une des revendications 1 à 12, **caractérisé en ce que** sont disposés sur la surface porteuse du coeur isolant au moins deux segments de l'élément chauffant qui comprennent chacun un fil de résistance électrique enroulé et des lignes de raccordement électrique alimentant celui-ci.

14. Chauffe-eau instantané (1) selon l'une des revendications 1 à 13, **caractérisé en ce qu'**il permet un contrôle de l'alimentation électrique de l'élément chauffant électrique (16) à l'aide d'une unité de commande, l'unité de commande déterminant au moins si l'élément chauffant (16) doit être alimenté en électricité ou s'il ne faut pas produire de chaleur.

15. Chauffe-eau instantané (1) selon la revendication 14, **caractérisé en ce que** l'unité de commande est configurée de telle manière que le chauffe-eau instantané (1) puisse adapter le chauffage de l'eau à une température d'utilisation sélectionnable, à savoir avec une adaptation de la puissance de chauffage et avec au moins une mesure de la température et/ou une mesure du débit.
